# EUROPEAN PATENT APPLICATION

(11) **EP 3 096 007 A1**
(43) Date of publication of application: **23.11.2016**
(21) Application number: 15168697.9
(22) Date of filing: 21.05.2015
(51) Int. Cl.: F03D 13/00, F03D 15/00

(54) **A WIND TURBINE**

(71) Applicant: Rotation Consultancy & Science Publications, 3818 VE Amersfoort (NL)
(72) Inventor: De Vries, Eize, 3818 VE Amersfoort (NL)
(74) Representative: De Vries & Metman

(57) **Abstract**

A wind turbine comprises a rotor which is rotatable about a rotor axis, a hydraulic pump which is drivably coupled to the rotor, a hydraulic motor which is drivably coupled to the pump via a hydraulic fluid circulation system and an electric generator which is drivably coupled to the motor. The generator has a generator axis which is angled with respect to the rotor axis and/or has a vertical component.

## Description

The present invention relates to a wind turbine comprising a rotor which is rotatable about a rotor axis, a hydraulic pump which is drivably coupled to the rotor, a hydraulic motor which is drivably coupled to the pump via a hydraulic fluid circulation system, and an electric generator which is drivably coupled to the motor.

Such a wind turbine is known from WO 2013/104694. The rotation of the rotor provides mechanical energy to the hydraulic pump to circulate high-pressure hydraulic fluid through the hydraulic fluid circulation system. The hydraulic motor converts energy from the circulating high-pressure fluid into mechanical energy. The motor drives the electric generator at a relatively high rotational speed, which converts the mechanical energy into electricity. A disadvantage of the known wind turbine is the mutual arrangement of the pump, the motor and the hydraulic fluid circulation system.

An object of the invention is to provide an improved wind turbine.

This object is accomplished with the wind turbine according to the invention, which is characterized in that the generator has a generator axis which is angled with respect to the rotor axis and/or has a vertical component.

The orientation of the generator axis according to the invention provides great freedom to locate the generator relative to the pump, the motor and the hydraulic fluid circulation system. It provides, for example, the opportunity to position the generator such that the wind turbine can be made compact in a direction along the rotor axis when the generator axis of the generator extends transversely with respect to the rotor axis. Furthermore, when the generator axis has a vertical component the bending forces on the generator shaft due to gravity are minimized. It is noted that the vertical component of the generator axis can be defined in a way that the angle between the generator axis and its vertical component is smaller than the angle between the generator axis and its horizontal component.

In a specific embodiment the rotor axis has a horizontal component and the pump, the motor and the generator are accommodated in a nacelle which is mounted to a tower, wherein the nacelle is rotatable with respect to the tower about an upwardly directed yaw axis. In this case the wind turbine is a so-called horizontal-axis wind turbine. The known wind turbine as described hereinbefore in relation to the preamble of claim 1 is also a horizontal-axis wind turbine and has a disadvantage in that the generator axis of the fast rotating generator is perpendicular to the yaw axis. This leads to high loads on the generator bearings during yaw actions due to gyroscopic forces reinforced by a cumulative combination with centrifugal forces due to continuously fluctuating generator-axis bending loads during rotation. Since the generator axis of the wind turbine according to the invention can have a vertical component the variation of the direction of the generator axis relative to the tower can be minimized upon turning the nacelle about the yaw axis. As a consequence, gyroscopic forces of the generator shaft onto bearings thereof can be minimized. For example, the generator axis may extend substantially parallel to the yaw axis so that rotation of the nacelle around the yaw axis does not lead to gyroscopic forces on the bearings of the generator.

Furthermore, the vertical orientation of the generator axis provides the opportunity to place the generator in the nacelle such that the weight of the generator is concentrated close to the yaw axis. For example, the distance between the generator axis of the generator and the vertical yaw axis may be less than 1.5 times the diameter of a yaw bearing that supports the nacelle, or it may be less than 1.0 times the diameter of the yaw bearing. In this way, the inertia of rotation around the yaw axis is relatively low, so that it is easier to face the rotor to the wind and a yaw drive can be relatively light. From a total system perspective this also has a positive impact on tower weight and cost and foundation weight and cost.

In a practical embodiment the rotor axis extends substantially horizontally, the yaw axis extends substantially vertically and the generator axis extends substantially vertically. In this case the motor may be located above the generator. This means that the motor can be located at a distance from a bottom of the nacelle, for example such that a high-pressure inlet of the motor is positioned at about the same height as the rotor axis, or alternatively halfway of the height within the nacelle. This may be advantageous in order to connect the hydraulic fluid circulation system to the motor in a way which allows a compact hydraulic fluid circulation system. Such a compact overall system minimizes hydraulic flow losses and minimizes dynamic flow amplifying and other negative effects occurring within the system. It is also possible that the motor is located below the generator.

In a possible embodiment the pump is a first hydraulic pump whereas a second hydraulic pump is also drivably coupled to the rotor, wherein the hydraulic fluid circulation system comprises at least two high-pressure lines between the respective pumps and the motor, wherein the lengths of the high-pressure lines are substantially equal. In general especially individual high-pressure lines should be as short as possible for limiting flow losses. The same applies for the length of low-pressure lines, but this is less critical. Their substantially equal pipe lengths further minimizes unwanted dynamic effects leading to oil flow differences and uneven loading of the pumps, the motor and other components of a drivetrain between the rotor and the generator. It is noted that the embodiment may have three or more additional pumps which are drivably coupled to the rotor.

The rotor may comprise a ring-shaped gear meshing with pinions of the respective first and second hydraulic pumps which are located at mutual angular distance about the rotor axis. The mutual angular distances between the pumps may be equal in order to create a rotation symmetric arrangement of the pumps. This provides the opportunity to locate the hydraulic fluid circulation system within a compact space about the rotor axis.

The hydraulic motor may be located within a circumference of a virtual cylinder about the rotor axis which is defined by high-pressure outlets of the pumps. This means that it can be located centrally in the nacelle, close to the rotor axis or at the rotor axis, which provides the opportunity to arrange the hydraulic fluid circulation system within the same circumference, hence minimizing its required space.

In a particular embodiment the pump and the motor are a first hydraulic pump and a first hydraulic motor, respectively, whereas a second hydraulic pump is also drivably coupled to the rotor and a second hydraulic motor is drivably coupled to the second pump via the hydraulic fluid circulation system, and the generator is a first generator whereas a second generator is drivably coupled to the second hydraulic motor, wherein the first and second generator have opposite directions of rotation. In this way, speed changes in the rotation speed of the generators do not add a rotation torque on the nacelle around the yaw axis, so that there is no interference or additional load on a yaw drive. If the generators are made counter-rotating and are placed in vertical parallel position, it will nearly eliminate generator rotor inertia moments with a positive impact at the required yawing system capacity, yaw operating energy use, mass and cost.

The invention will hereafter be elucidated with reference to schematic drawings showing an embodiment of the invention by way of example.
Fig. 1 is a side view of an embodiment of a wind turbine according to the invention.
Fig. 2 is a perspective cut-away view of the nacelle of the wind turbine as shown in Fig. 1 on a larger scale.
Fig. 3 is a cross-sectional view of a part of the wind turbine as shown in Fig. 1 on a larger scale.

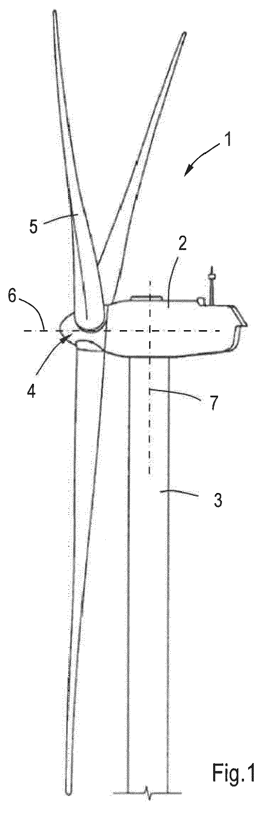

Fig. 1 shows an embodiment of a wind turbine 1 according to the invention. The wind turbine 1 has a nacelle 2 mounted on top of a tower 3 and a rotor 4. The rotor 4 includes rotor blades 5 and is rotatable with respect to the nacelle 2 about a rotor axis 6. The embodiment as shown in Fig. 1 is a so-called horizontal-axis wind turbine, of which the rotor axis 6 has a horizontal component. The rotor axis 6 of a horizontal-axis wind turbine may have a vertical component, but the angle to its vertical component is much larger than to its horizontal component. The nacelle 2 is rotatable with respect to the tower 3 about a vertical yaw axis 7 such that it can be turned in dependence of the direction of the wind.

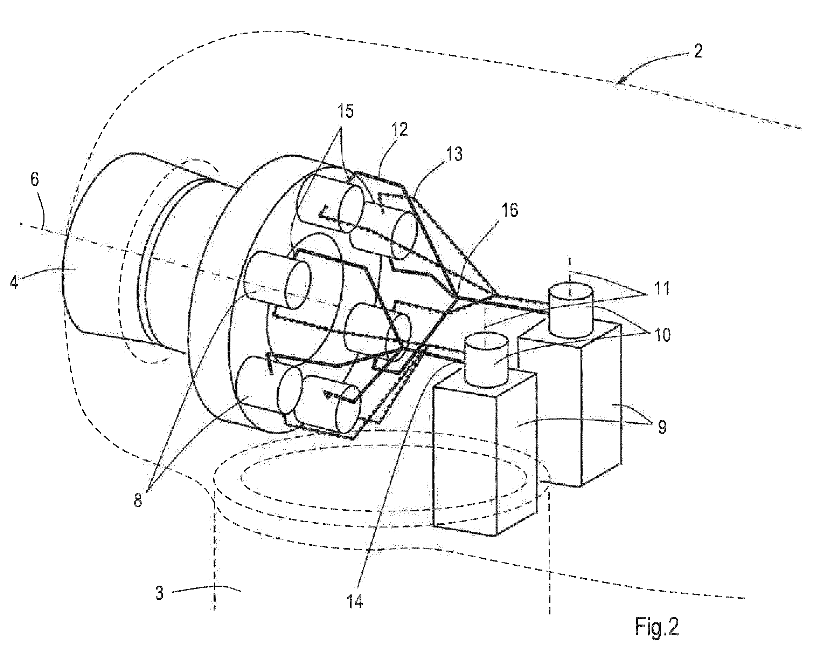

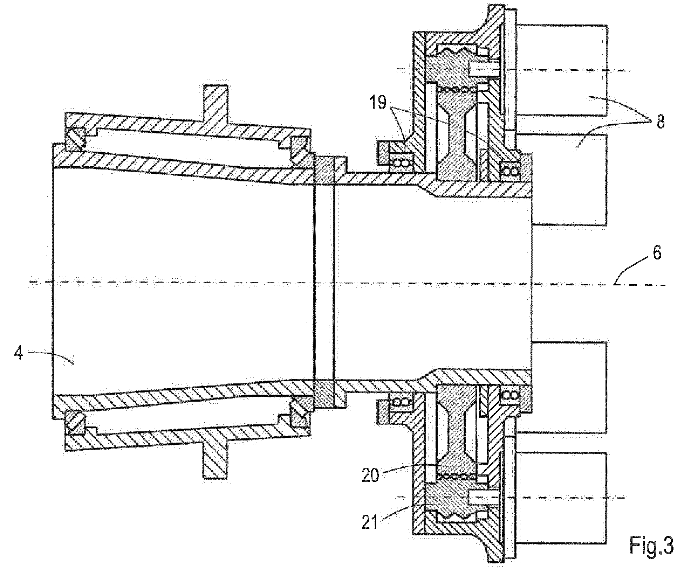

Fig. 2 shows the interior of the nacelle 2. The nacelle 2 accommodates six hydraulic pumps 8 which are drivably coupled to the rotor 4 via a gear transmission. The gear transmission is located in a ring-shaped housing which is supported by the rotor 4 via bearings 19 and mounted to the nacelle 2, see Fig. 3. In the embodiment as shown in Figs. 2 and 3 the gear transmission comprises a ring-shaped outer tooth gear 20 which is fixed to the rotor 4 and six pinions 21 which are fixed to respective drive shafts of the hydraulic pumps 8. The ring-shaped gear 20 meshes with each of the pinions 21 such that the pumps 8 are driven synchronously upon rotating the rotor 4. The pumps 8 are located at equi-angular distance about the rotor axis 6 and their drive shafts extend parallel to the rotor axis 6.

Furthermore, the nacelle 2 accommodates two electric generators 9 which are drivable by respective hydraulic motors 10. The hydraulic motors 10 have motor shafts which are directly coupled to generator shafts of the respective generators 9. In this case the centrelines of the motor shafts coincide with the respective rotation axes 11 of the generators 9. The generators 9 have respective rotation axes 11 which have vertical components. In the embodiment as shown in Fig. 2 the respective rotation axes 11 extend vertically and more or less perpendicularly to the rotor axis 6.

The nacelle 2 is provided with a hydraulic fluid circulation system including high-pressure lines 12 and low-pressure lines 13. Each of the hydraulic motors 10 in this embodiment has a high-pressure inlet 14 which communicates with three high-pressure outlets 15 of three respective pumps 8 via three respective high-pressure lines 12. The separate high-pressure lines 12 coming from three pumps 8 are joined to a single high-pressure line at a high-pressure junction 16 located upstream of the high-pressure inlet 14 of the corresponding motor 10. The lengths of the high-pressure lines 12 between the respective high-pressure outlets 15 and the high-pressure junction 16 are substantially equal. This equally applies in any alternative embodiment with two or more pumps and one hydraulic motor and corresponding single electric generator. The pumps 8, the high-pressure lines 12, the high-pressure junction 16 and the motor 10 are located such that the actual distance between the respective high-pressure outlets 15 of the pumps 8 and the inlet of the motor 10 is as short as possible. For that reason, the high-pressure junctions 16 are located at substantially the same height level and horizontal positions as the high-pressure inlets 14 of the respective motors 8, which is approximately at the same height level as the rotor axis 6. The high-pressure inlet 14 of the motor 10 is located within a circumference of a virtual cylinder about the rotor axis 6 which is defined by the high-pressure outlets 15 of the six pumps 8. In this case the high-pressure inlets 14 of the motors 10 are more or less located at the height level of the rotor axis 6.

The low-pressure lines 13 of the hydraulic fluid circulation system are coupled to the pumps 8 and the motors 10 via a low-pressure junction in a similar way as the high-pressure lines 12.

The generators 9 provide the generated electricity to a power grid via a power-electronic converter and medium-voltage transformer or directly to a transmission line (not shown), depending on generator voltage level. In an alternative embodiment having a rotational speed variable hydraulic motor, the generator or generators may operate at a fixed frequency (50Hz or 60Hz) and can directly feed grid compliant electric power to the grid with or without intermediate medium-voltage transformer, again depending on generator voltage level. The nacelle 2 may further house other equipment for controlling and operating the wind turbine 1.

Fig. 2 shows that the bottom of the nacelle 2 comprises a circular opening where the nacelle 2 is supported by the tower 3. At the opening the nacelle 2 is provided with yaw bearings and drive means (not shown) for rotating the nacelle 2 with respect to the tower 3.

The invention is not limited to the embodiment shown in the drawings and described hereinbefore, which may be varied in different manners within the scope of the claims and their technical equivalents. For example, it is conceivable that the rotor axis is oriented vertically whereas the generator axis of the generator has a vertical component, as well. It is further conceivable that the rotor axis and the generator axis extend substantially parallel to each other such that the wind turbine can be designed compact and efficient in a direction along the rotor axis. In such a case the wind turbine may be arranged without a tower and/or a rotatable nacelle. It is also conceivable that the horizontal-axis turbine rotor is located behind the tower relative to the approaching wind, in what is called the downwind principle.

## Claims

1. A wind turbine (1) comprising a rotor (4) which is rotatable about a rotor axis (6), a hydraulic pump (8) which is drivably coupled to the rotor (4), a hydraulic motor (10) which is drivably coupled to the pump (8) via a hydraulic fluid circulation system (12, 13, 16) and an electric generator (9) which is drivably coupled to the motor (10), **characterized in that** the generator (9) has a generator axis (11) which is angled with respect to the rotor axis (6) and/or has a vertical component.

2. A wind turbine (1) according to claim 1, wherein the rotor axis (6) has a horizontal component and the pump (8), the motor (10) and the generator (9) are accommodated in a nacelle (2) which is mounted to a tower (3), wherein the nacelle (2) is rotatable with respect to the tower (3) about an upwardly directed yaw axis (7).

3. A wind turbine (1) according to claim 2, wherein the rotor axis (6) extends substantially horizontally, the yaw axis (7) extends substantially vertically and the generator axis (11) extends substantially vertically.

4. A wind turbine (1) according to claim 3, wherein the motor (10) is located above the generator (9).

5. A wind turbine (1) according to one of the preceding claims, wherein said pump (8) is a first hydraulic pump whereas a second hydraulic pump is also drivably coupled to the rotor (4), wherein the hydraulic fluid circulation system (12, 13, 16) comprises at least two high-pressure lines (12) between the respective pumps (8) and the motor (10), wherein the lengths of the high-pressure lines (12) are substantially equal.

6. A wind turbine (1) according to claim 5, wherein the rotor (4) comprises a ring-shaped gear meshing with pinions of the respective first and second hydraulic pumps (8) which are located at mutual angular distance about the rotor axis (6).

7. A wind turbine (1) according to claim 6, wherein the hydraulic motor (10) is located within a circumference of a virtual cylinder about the rotor axis (6) which is defined by high-pressure outlets (15) of the pumps (8).

8. A wind turbine (1) according to claim 2 or 3, wherein said pump (8) and said motor (10) are a first hydraulic pump and a first hydraulic motor, respectively, whereas a second hydraulic pump is also drivably coupled to the rotor (4) and a second hydraulic motor is drivably coupled to the second pump via the hydraulic fluid circulation system (12, 13, 16), and said generator (9) is a first generator whereas a second generator is drivably coupled to the second hydraulic motor, wherein the first and second generator have opposite directions of rotation.
